Europäisches Patentamt

European Patent Office

Office européen des brevets

(11) Veröffentlichungsnummer: **0 338 204 B1**

(12) # EUROPÄISCHE PATENTSCHRIFT

(45) Veröffentlichungstag der Patentschrift: **17.08.94**

(51) Int. Cl.⁵: **C22C 38/58**, C22C 19/07, C22C 19/05, C22C 30/00

(21) Anmeldenummer: **89102814.4**

(22) Anmeldetag: **18.02.89**

(54) **Hartstofflegierung.**

(30) Priorität: **25.02.88 DE 3805835**

(43) Veröffentlichungstag der Anmeldung:
**25.10.89 Patentblatt 89/43**

(45) Bekanntmachung des Hinweises auf die Patenterteilung:
**17.08.94 Patentblatt 94/33**

(84) Benannte Vertragsstaaten:
**DE ES FR GB IT NL SE**

(56) Entgegenhaltungen:
**CH-A- 657 380**      **FR-A- 1 369 572**
**FR-A- 2 099 312**    **FR-A- 2 129 518**
**FR-A- 2 351 181**    **GB-A- 2 000 188**
**US-A- 2 657 130**    **US-A- 2 671 726**
**US-A- 2 711 959**    **US-A- 3 165 400**
**US-A- 3 853 545**

(73) Patentinhaber: **TRW Motorkomponenten GmbH & Co KG**

**D-30890 Barsinghausen (DE)**

(72) Erfinder: **Weintz, Richard, Dr. Ing.**
**Ringstrasse 17**
**D-7715 Hüfingen (DE)**
Erfinder: **Müller, Reinhard, Dr. Ing.**
**Harrenhorst 14**
**D-3052 Bad Nenndorf (DE)**

(74) Vertreter: **Arendt, Helmut, Dipl.-Ing.**
**Patentanwalt**
**Bergiusstrasse 2 c**
**D-30655 Hannover (DE)**

EP 0 338 204 B1

## Beschreibung

Die Erfindung betrifft eine Hartstofflegierung zum Beschichten thermisch und chemisch hoch beanspruchter Maschinenbauteile aus metallischen Grundwerkstoffen.

Stark beanspruchte Maschinenbauteile werden mit einem härteren Material vorwiegend durch Auftragsschweißen beschichtet. Von großer Bedeutung ist beispielsweise das Auftragsschweißen von Sitzpanzerungen auf Gaswechselventilen von Verbrennungsmotoren. Hierfür werden Legierungen verwendet, die auf Kobalt, Nickel, Kobalt und Nickel, verschiedentlich aber auch auf Eisen basieren. Eine Auswahl solcher zum Auftragsschweißen verwendeten Legierungen (Stellite), die nicht nur für Ventilsitze für Verbrennungsmotoren, sondern weltweit zur Begrenzung von Verschleißproblemen Verwendung finden, ist in der Tabelle 1 mit den Nennzusammensetzungen aufgelistet. Mit den darin angegebenen Kobalt- oder Nickelsonderlegierungen werden vor allem die Auslaßventile, deren Grundwerkstoffe sich bei den hohen Temperaturen bis zu 1000°C verformen, korrodieren und an der Dichtfläche einschlagen, gepanzert.

Typische standardisierte Grundwerkstoffe nach DIN 17480 für Gaswechselventile sind in der Tabelle 2 als Auszug zusammengestellt.

Es ist allgemein bekannt, daß insbesondere stickstoffhaltige Grundwerkstoffe beim Auftragsschweißen sehr porenanfällig sind und zwar unabhängig von der Schweißart, d. h. also sowohl beim autogenen als auch beim Plasma-Pulver-Auftragsschweißen. Begründet wird das Auftreten der Poren direkt mit dem Stickstoff der beteiligten Werkstoffe für das Grundmaterial und gegebenenfalls für die Aufschweißlegierung, wie es beispielsweise in dem Aufsatz "A Powder Fed Plasma Transferred Arc Process for Hard Facing Internal Combustion Engine Valve Seats" von J. Milligan und S. Narasimhan in SAE Technical Paper Series Nr. 800317, aus 1980 geschildert wird. Darin wird für den Poreninhalt Stickstoff angenommen. Als bekannt wird dabei vorausgesetzt, daß sehr kostengünstige Ventilwerkstoffe auf der Basis von Chrom-Mangan-Nickel-Eisen mit ca. 0,5 % (5000 ppm) Stickstoff legiert sind und daß auf Grund dieser vermuteten Zusammenhänge der Stickstoffanteil in den Hartstofflegierungen zum Auftragsschweißen, ähnlich wie deren Sauerstoffgehalt, auf etwa 0,04 % (400 ppm) begrenzt wird. Diese Grenzen liegen bereits recht hoch, denn es sind Spezifikationen bekannt, für welche auf Grund der vorgenannten Überlegungen zur Verbesserung der Eignung zur Auftragsschweißung auch Gehalte von max. 200 ppm gefordert werden. Diese Stickstoffgehalte ergeben sich als Kompromiß bei der Herstellung, wofür aus Kostengründen Stickstoff sowohl als Schutzgasabdeckung bei der Herstellung, also beim Erschmelzen und Vergießen von Strang- und Saugguß verwendet wird und ebenfalls auch als Verdüsungsgas bei der Herstellung von Schweißpulvern zum Auftragsschweißen. Stickstoff wird aus wirtschaftlichen Gründen bevorzugt, weil die Verwendung von Argon mit wesentlich höheren Kosten verbunden ist, die dann allerdings zu erheblich niedrigeren Stickstoffgehalten in Hartstofflegierungen führen könnten. Davon wurde aber bisher kaum Gebrauch gemacht, weil eine weitere kostensteigernde Begrenzung der Stickstoffgehalte in Aufschweißlegierungen durch den sehr hohen Stickstoffgehalt des Grundwerkstoffes ohnehin zunichte gemacht worden wäre. Die Grenze von 400 ppm galt daher als unbedingt erforderlich, um die Probleme der Plasma-Pulver-Auftragsschweißung wenigstens ausreichend zu beherrschen.

Bis zum gegenwärtigen Zeitpunkt galt die einwandfreie verfahrensmäßige Beherrschung von Plasma-Pulver-Auftragsschweißungen auf den stickstoffhaltigen Grundwerkstoffen als schwierig, da man ohne genaue Kenntnis der wirklichen Einflußgrößen mit mehr oder weniger großen Ausschußanteilen durch Porosität rechnen mußte. Hierbei konnte der Ausschuß durch Porosität von niedrigen Werten, beispielsweise 0,1 % bis 1 % ohne weiteres auf hohe Werte, beispielsweise 5 % bis 10 % oder manchmal auf noch höhere Werte ansteigen, ohne daß eine Klärung nach dem Gesetz von Ursache und Wirkung möglich war. Infolgedessen haben sich aus singulären Ergebnissen oft zufällig bedingte "Erfahrungen" entwickelt, die zeitweilig als Leitlinie vorgegeben, dann aber wieder verlassen werden mußten, weil sie im Wiederholungsfalle plötzlich nicht mehr zutrafen. Derartige Bevorzugungen galten oder gelten noch für gewisse Zusammensetzungen der Auftragsschweißwerkstoffe für Maschinenanlagen und Parameterwerte sowie für entsprechende Programmabläufe bei automatisierten Prozessen. Deshalb haben Fachleute nie den Versuch unternommen, besonders hoch mit Stickstoff legierte Plasma-Pulver-Auftragsschweißwerkstoffe zu erproben.

Unter Berücksichtigung der vorbezeichneten Schwierigkeiten war es daher Aufgabe der Erfindung, eine Werkstofflegierung nach dem einleitend genannten Gattungsbegriff zu finden, mit der im modernen Verständnis der statistischen Qualitätssicherung ein als beherrschter Prozeß zu bezeichnender Produktionsablauf für das Beschichten von Grundwerkstoffen mit geringen Ausschußanteilen durch Porosität gewährleistet wird. Zur Lösung dieser Aufgabe zeigten sich überraschenderweise Werkstofflegierungen nach den Kennzeichen der Ansprüche 1 bis 11 als geeignet, die als besonders bedeutsam jeweils einen Stickstoffgehalt von mehr als 0,1 Masse-% ausweisen. Bevorzugte Ausführungsformen sind in den Ansprüchen 12 und 13 definiert.

2

Als besonders vorteilhaft hat sich das Hinzufügen weiterer, bisher wenig benutzter Legierungselemente gezeigt, wie beispielsweise Aluminium, die dann, wenn gleichzeitig Stickstoff zugegen ist als verschleißmindernde Nitride wirksam werden. Viele der in Hartstofflegierungen vorhandenen Karbid-Bildner bilden bekanntlich gleichzeitig Nitride, die oft härter und verschleißfester als die entsprechenden Karbide sind. Als besonders günstig für eine einwandfreie, porenfreie Verarbeitung konnte ein Aufschweißwerkstoff folgender Zusammensetzung in Masse-% ermittelt werden:

C 1,10
Si bis 0,1
Mn 10,7
Cr 29,3
Ni 11,7
Mo 7,8
Nb 3,1
N 0,8
Al 0,7
Fe Rest,
der auf den Grundwerkstoff 1.4871 oder X53CrMnNiN219 mit der Zusammensetzung in Masse-%
C 0,55
Si 0,20
Mn 9,32
P 0,031
S 0,005
Cr 20,48
Ni 3,33
N 0,42
aufgetragen wurde.

Es war nicht vorauszusehen, daß sich Hartstofflegierungen mit Stickstoffgehalten von mehr als 0,1 % (1000ppm) auf stickstoffhaltigem Grundwerkstoff mit ähnlich hohem Stickstoffgehalt nach dem Plasma-Pulver-Auftragsschweißverfahren porenfrei verarbeiten lassen würde. Die bisher bekannten einleitend genannten Schwierigkeiten ließen nach Auffassung der Fachwelt das Ergebnis der durchgeführten Beschichtung nicht erwarten. Die Porenfreiheit wurde mit Röntgendurchstrahlung und mit metallografischen Methoden (mikroskopische Untersuchungsverfahren) an Quer- und Längsschliffen bestätigt. Das überraschende Ergebnis wurde anschließend in mehreren Versuchsreihen reproduziert. Ein weiterer Vorteil der Zulegierung von Stickstoff zu den bekannten Auftragsschweißwerkstoffen besteht darin, daß durch die Stickstoffverbindungen der nitridbildenden Elemente zusätzliche Hartstoffe in den Legierungen entstehen können, die auf Grund ihrer hohen Härte, Verschleißbeständigkeit aber auch feineren Verteilung die Eigenschaften der Hartstofflegierungen in ganz erheblichem Maße verbessern können in dem Sinne, daß deren Härte, Verschleißfestigkeit und Duktilität gleichermaßen steigen. Ein weiterer Vorteil des Beschichtungswerkstoffs mit hohen Stickstoffgehalten besteht darin, daß mit den teuren, karbidbildenden Elementen sparsamer umgegangen werden kann. So genügen erfahrungsgemäß bei hohen Beanspruchungen schon 6 % bis 10 % der karbidbildenden Stoffe, wie beispielsweise Wolfram oder Molybdän, um dieselbe Wirkung zu erzielen, wie mehr als 10 % Wolfram allein. Es ist also eine wirtschaftlichere Ausnutzung der karbidbildenden Stoffe möglich.

EP 0 338 204 B1

**<u>Panzerwerkstoffe</u>**     Tabelle 1

| | | | | | | | | | |
|---|---|---|---|---|---|---|---|---|---|
| C | 2.5 | 1.20 | 1.75 | 1.5 - 1.7 | 2.0 - 2.5 | 1.75 - 2.25 | 1.90 | 1.20 | 0.1 |
| Si | 1.3 | 1.20 | 1.0 | 0.9 - 1.3 | 0.8 - 1.3 | 0.5 max. | 0.36 | 1.00 | 1.2 |
| Cr | 30.0 | 28.0 | 25.0 | 25 - 28 | 22 - 26 | 25 - 27 | 28 | 30 | 19.5 |
| Mn | 0.5 | 0.5 | 0.3 | – | | 0.5 max. | 0.11 | 0.50 | 0.05 |
| Ni | 1.5 | 3.0 | 22.0 | Rest | 10 - 12 | Rest | 15.04 | 2.25 | 76.0 |
| Nb | – | – | – | – | – | – | – | – | 1.5 |
| Mo | | 0.5 | | – | 5 - 6 | – | 5.5 | – | – |
| Co | Rest | Rest | Rest | 10 - 11 | – | 0.3 max. | – | Rest | – |
| W | 13.0 | 4.0 | 12.0 | 11.5 - 13.0 | – | 8 - 9.4 | – | 4.5 | – |
| Fe | 3.0 | 3.0 | 3.0 | 1.35 | Rest | 4 max. | Rest | 3.0 | 1.4 |
| B | – | – | – | – | – | 0.01 max. | | | – |

Tabelle 2

### Grundwerkstoffe

| Werkstoff | | Massegehalt in % | | | | | | | | | |
|---|---|---|---|---|---|---|---|---|---|---|---|
| Kurzname | Werkstoff-Nr. | C | Si | Mn | P max. | S max. | Cr | Mo | Ni | Sonstige |
| X 45 CrNiW 18 9 | 1.4873 | 0,40 - 0,50 | 2,0 - 3,0 | 0,80 - 1,5 | 0,045 | 0,030 | 17,0 - 19,0 | | 8,0 - 10,0 | 0,80 - 1,20 W |
| X 55 CrMnNiN 20 8 | 1.4875 | 0,50 - 0,60 | max. 0,25 | 7,0 - 10,0 | 0,050 | 0,030* | 19,5 - 21,5 | | 2,0 - 2,75 | 0,20 - 0,40 N |
| X 53 CrMnNiN 21 9 | 1.4871 | 0,48 - 0,58 | max. 0,25 | 7,0 - 10,0 | 0,050 | 0,030* | 20,0 - 22,0 | | 3,25 - 4,5 | 0,38 - 0,50 N |
| X 50 CrMnNiNbN 21 9 | 1.4882 | 0,45 - 0,55 | max. 0,45 | 8,0 - 10,0 | 0,050 | 0,030 | 20,0 - 22,0 | | 3,5 - 5,0 | 0,80 - 1,50 W; 1,80 - 2,50 Nb-Ta |
| X 60 CrMnMoVNbN 21 10 | 1.4785 | 0,57 - 0,65 | max. 0,25 | 9,5 - 11,5 | 0,050 | 0,025 | 20,0 - 22,0 | 0,75 - 1,25 | max. 1,50 | 0,40 - 0,60 N; 0,75 - 1,00 V; 1,00 - 1,20 Nb |
| NiCr 20 Ti Al ** | 2.4952** | 0,04 - 0,10 | max. 1,0 | max. 1,0 | 0,020 | 0,015 | 18,0 - 21,0 | | min. 65 | 0,40 - 0,60 N; max. 1,5 Fe; max. 0,2 Cu; max. 1,0 Co; max. 0,008 B; 1,0 - 1,8 Al; 1,8 - 2,7 Ti |

\* Bei der Bestellung kann auch ein Schwefelgehalt von 0,020 - 0,060 % vereinbart werden.

\*\* Für diese Legierung sind jeweils die Werte der letzten Ausgabe von DIN 17742 maßgebend.

## Patentansprüche

1. Hartstofflegierung zum Beschichten thermisch und chemisch hochbeanspruchter Maschinenbauteile aus metallischen Grundwerkstoffen, gekennzeichnet durch folgende Zusammensetzung:

C 0,80 - 1,50 Masse-%
Si max 0,40 Masse-%
Cr 25,0 - 30,0 Masse-%
Mn 7,0 - 15,0 Masse-%
Ni 7,0 - 15,0 Masse-%
Mo 3,0 - 8,0 Masse-%
Fe Rest
Nb 2,0 - 4,0 Masse-%
Al 0,2 - 1,0 Masse-%
N 0,105 - 0,80 Masse-%

2. Hartstofflegierung zum Beschichten thermisch und chemisch hochbeanspruchter Maschinenbauteile aus metallischen Grundwerkstoffen, gekennzeichnet durch folgende Zusammensetzung:
C 0,5 - 1,5 Masse-%
Si max 0,40 Masse-%
Cr 24,0 - 30,0 Masse-%
Mn 7,0 - 15,0 Masse-%
Ni 7,0 - 15,0 Masse-%
Mo 2,0 - 8,0 Masse-%
Fe Rest
Nb 1,5 - 4,0 Masse-%
N 0,105- 0,8 Masse-%

3. Hartstofflegierung zum Beschichten thermisch und chemisch hochbeanspruchter Maschinenbauteile aus metallischen Grundwerkstoffen, gekennzeichnet durch folgende Zusammensetzung:
C 2,40 - 2,80 Masse-%
Si max - 1,5 Masse-%
Cr 28,0 - 32,0 Masse-%
Mn max - 1,0 Masse-%
Ni max - 3,0 Masse-%
Co Rest
Mo max - 1,0 Masse-%
W 11,5 - 14,0 Masse-%
Fe max - 3,0 Masse-%
N 0,105 - 0,8 Masse-%

4. Hartstofflegierung zum Beschichten thermisch und chemisch hochbeanspruchter Maschinenbauteile aus metallischen Grundwerkstoffen, gekennzeichnet durch folgende Zusammensetzung:
C 1,20 - 1,60 Masse-%
Si 0,7 - 1,5 Masse-%
Cr 26,0 - 30,0 Masse-%
Mn max - 0,5 Masse-%
Ni max - 3,0 Masse-%
Co Rest
Mo max - 1,0 Masse-%
W 3,5 - 5,5 Masse-%
Fe max - 3,0 Masse-%
N 0,105 - 0,8 Masse-%

5. Hartstofflegierung zum Beschichten thermisch und chemisch hochbeanspruchter Maschinenbauteile aus metallischen Grundwerkstoffen, gekennzeichnet durch folgende Zusammensetzung:
C 1,75 - 2,10 Masse-%
Si 0,9 - 1,3 Masse-%
Cr 23,0 - 27,0 Masse-%
Mn max - 0,3 Masse-%
Ni 21,0 - 24,0 Masse-%
Co Rest
Mo max - 0,6 Masse-%

W 11,5 - 13,0 Masse-%
Fe 0,85 - 1,35 Masse-%
N 0,105 - 0,8 Masse-%

6. Hartstofflegierung zum Beschichten thermisch und chemisch hochbeanspruchter Maschinenbauteile aus metallischen Grundwerkstoffen, gekennzeichnet durch folgende Zusammensetzung:
C 1,0 - 1,3 Masse-%
Si 0,9 - 1,3 Masse-%
Cr 27,0 - 30,0 Masse-%
Mn 7,0 - 10,0 Masse-%
Ni 15,0 - 25,0 Masse-%
Co Rest
Mo max 0,6 Masse-%
W 10,0 - 12,0 Masse-%
Fe max 1,35 Masse-%
N 0,105 - 0,8 Masse-%

7. Hartstofflegierung zum Beschichten thermisch und chemisch hochbeanspruchter Maschinenbauteile aus metallischen Grundwerkstoffen, gekennzeichnet durch folgende Zusammensetzung:
C 2,50 - 3,00 Masse-%
Si 0,8 - 1,3 Masse-%
Cr 22,0 - 26,0 Masse-%
Mn max - 0,3 Masse-%
Ni 10,0 - 12,0 Masse-%
Mo 5,0 - 6,0 Masse-%
Fe Rest
N 0,105 - 0,8 Masse-%

8. Hartstofflegierung zum Beschichten thermisch und chemisch hochbeanspruchter Maschinenbauteile aus metallischen Grundwerkstoffen, gekennzeichnet durch folgende Zusammensetzung:
C 1,70 - 2,20 Masse-%
Si max - 0,4 Masse-%
Cr 26,0 - 30,0 Masse-%
Mn max - 0,3 Masse-%
Ni 14,0 - 16,0 Masse-%
Mo 4,0 - 7,0 Masse-%
Fe Rest
N 0,105 - 0,8 Masse-%

9. Hartstofflegierung zum Beschichten thermisch und chemisch hochbeanspruchter Maschinenbauteile aus metallischen Grundwerkstoffen, gekennzeichnet durch folgende Zusammensetzung:
C 1,00 - 1,40 Masse-%
Si 0,8 - 1,3 Masse-%
Cr 28,0 - 32,0 Masse-%
Mn max - 0,5 Masse-%
Ni max - 2,25 Masse-%
Co Rest
W 3,0 - 6,0 Masse-%
Fe max - 3,0 Masse-%
N 0,105- 0,8 Masse-%

10. Hartstofflegierung zum Beschichten thermisch und chemisch hochbeanspruchter Maschinenbauteile aus metallischen Grundwerkstoffen, gekennzeichnet durch folgende Zusammensetzung:
C 1,70 - 2,20 Masse-%
Si 0,9 - 1,3 Masse-%
Cr 25,0 - 28,0 Masse-%
Ni Rest
Co 10,0 - 12,0 Masse-%

W 11,5 - 13,0 Masse-%
Fe max - 1,35 Masse-%
N 0,105 0,8 Masse-%

**11.** Hartstofflegierung zum Beschichten thermisch und chemisch hochbeanspruchter Maschinenbauteile aus metallieschen Grundwerkstoffen, gekennzeichnet durch folgende Zusammensetzung:
C 1,2 - 2,2 Masse-%
Si max 0,4 Masse-%
Cr 18,0 - 25,0 Masse-%
Mn 7,0 - 15,0 Masse-%
Ni 15,0 - 25,0 Masse-%
Mo 8,0 - 15,0 Masse-%
Fe Rest
Al 0,2 - 1,0 Masse-%
N 0,105- 0,8 Masse-%

**12.** Hartstofflegierung nach einem der Ansprüch 1 bis 8, dadurch gekennzeichnet, daß sie als Panzerwerkstoff auf Gaswechselventilen von Verbrennungsmotoren aufgebracht ist.

**13.** Hartstofflegierung nach einem der Ansprüche 2 bis 10 und 12, gekennzeichnet durch einen Aluminiumzusatz von 0,1 bis 2 Masse-% zu Lasten des Restelements.

## Claims

**1.** A hard facing alloy for coating machine components of metal based materials which are highly stressed both thermally and mechanically, characterised by the following composition:
C 0.80 - 1.5 % by weight
Si max - 0.40 % by weight
CR 25.00 - 30.0 % by weight
Mn 7.0 - 15.0 % by weight
Ni 7.0 - 15.0 % by weight
Mo 3.0 - 8.0 % by weight
Fe residue
Nb 2.0 - 4.0 % by weight
Al 0.2 - 1.0 % by weight
N 0.105 - 0.80 % by weight

**2.** A hard facing alloy for coating machine components of metal based materials which are highly stressed both thermally and mechanically, characterised by the following composition:
C 0.5 - 1.5 % by weight
Si max - 0.40 % by weight
Cr 24.0 - 30.0 % by weight
Mn 7.00 - 15.0 % by weight
Ni 7.0 - 15.0 % by weight
Mo 2.0 - 8.0 % by weight
Fe residue
Nb 1.5 - 4.0 % by weight
N 0.105 - 0.8 % by weight

**3.** A hard facing alloy for coating machine components of metal based materials which are highly stressed both thermally and mechanically, characterised by the following composition:
C 2.40 - 2.80 % by weight
Si max - 1.5 % by weight
Cr 28.0 - 32.0 by weight
Mn max - 1.0 % by weight
Ni max - 3.0 % by weight
Co residue
Mo max - 1.0 % by weight

W 11.5 - 14.0 % by weight
Fe max - 3.0 % by weight
N 0.105 - 0.8 % by weight

4. A hard facing alloy for coating machine components of metal based materials which are highly stressed both thermally and mechanically, characterised by the following composition:
C 1.20 - 1.60 % by weight
Si 0.7 - 1.5 % by weight
Cr 26.0 - 30.0 % by weight
Mn max - 0.5 % by weight
Ni max - 3.0 % by weight
Co residue
Mo max - 1.0 % by weight
W 3.5 - 5.5 % by weight
Fe max - 3.0 % by weight
N 0.105 - 0.8 % by weight

5. A hard facing alloy for coating machine components of metal based materials which are highly stressed both thermally and mechanically, characterised by the following composition:
C 1.75 - 2.10 % by weight
Si 0.9 - 1.3 % by weight
Cr 23.0 - 27.0 % by weight
Mn max - 0.3 % by weight
Ni 21.0 - 24.0 % by weight
Co residue
Mo max - 0.6 % by weight
W 11.5 - 13.0 % by weight
Fe 0.85 - 1.35 % by weight
N 0.105 - 0.8 % by weight

6. A hard facing alloy for coating machine components of metal based materials which are highly stressed both thermally and mechanically, characterised by the following composition:
C 1.0 - 1.3 % by weight
Si 0.9 - 1.3 % by weight
Cr 27.0 - 30.0 % by weight
Mn 7.0 - 10.0 % by weight
Ni 15.0 - 25.0 % by weight
Co residue
Mo max - 0.6 % by weight
W 10.0 - 12.0 % by weight
Fe max - 1.35 % by weight
N 0.105 - 0.8 % by weight

7. A hard facing alloy for coating machine components of metal based materials which are highly stressed both thermally and mechanically, characterised by the following composition:
C 2.50 - 3.00 % by weight
Si 0.8 - 1.3 % by weight
Cr 22.0 - 26.0 % by weight
Mn max - 0.3 % by weight
Ni 10.0 - 12.0 % by weight
Mo 5.0 - 6.0 % by weight
Fe residue
N 0.105 - 0.8 % by weight

8. A hard facing alloy for coating machine components of metal based materials which are highly stressed both thermally and mechanically, characterised by the following composition:
C 1.70 - 2.20 % by weight
Si max - 0.4 % by weight

Cr 26.0 - 30.0 % by weight
Mn max - 0.3 % by weight
Ni 14.0 - 16.0 % by weight
Mo 4.0 - 7.0 % by weight
Fe residue
N 0.105 - 0.8 % by weight

9. A hard facing alloy for coating machine components of metal based materials which are highly stressed both thermally and mechanically, characterised by the following composition:

C 1.00 - 1.40 % by weight
Si 0.8 - 1.3 % by weight
Cr 28.0 - 32.0 % by weight
Mn max - 0.5 % by weight
Ni max - 2.25 % by weight
Co residue
W 3.0 - 6.0 % by weight
Fe max - 3.0 % by weight
N 0.105 - 0.8 % by weight

10. A hard facing alloy for coating machine components of metal based materials which are highly stressed both thermally and mechanically, characterised by the following composition:

C 1.70 - 2.20 % by weight
Si 0.9 - 1.3 % by weight
Cr 25.0 - 28.0 % by weight
Ni residue
Co 10.0 - 12.0 % by weight
W 11.5 - 13.0 % by weight
Fe max - 1.35 % by weight
N 0.105 - 0.8 % by weight

11. A hard facing alloy for coating machine components of metal based materials which are highly stressed both thermally and mechanically, characterised by the following composition:

C 1.2 - 2.2 % by weight
Si max - 0.4 % by weight
Cr 18.0 - 25.0 % by weight
Mn 7.0 - 15.0 % by weight
Ni 15.0 - 25.0 % by weight
Mo 8.0 - 15.0 % by weight
Fe residue
Al 0.2 - 1.0 % by weight
N 0.105 - 0.8 % by weight

12. A hard facing alloy according to one of Claims 1-8 characterised in that it is applied as an armouring material to the valves of internal combustion engines.

13. A hard facing alloy according to one of claims 2-10 and 12, characterised by 0.1-2% by weight addition of aluminium at the expense of the residual element.

## Revendications

1. Alliage à résistance mécanique élevée pour le revêtement de pièces de machine fortement sollicitées thermiquement et chimiquement en un matériau métallique de base, caractérisé par la composition suivante :

C 0,80 - 1,50 % en poids
Si max 0,40 % an poids
Cr 25,0 - 30,0 % en poids
Mn 7,0 - 15,0 % en poids
Ni 7,0 - 15,0 % en poids

Mo 3,0 - 8,0 % en poids
Fe Reste
Nb 2,0 - 4,0 % en poids
Al 0,2 - 1,0 % en poids
N 0,105 - 0,80 % en poids

2. Alliage à résistance mécanique élevée pour le revêtement de pièces de machine fortement sollicitées thermiquement et chimiquement en un matériau métallique de base, caractérisé par la composition suivante :

C 0,5 - 1,5 % en poids
Si max. - 0,40 % en poids
Cr 24,0 - 30,0 % en poids
Mn 7,0 - 15,0 % en poids
Ni 7,0 - 15,0 % en poids
Mo 2,0 - 8,0 % en poids
Fe Reste
Nb 1,5 - 4,0 % en poids
N 0,105 - 0,8 % en poids

3. Alliage à résistance mécanique élevée pour le revêtement de pièces de machine fortement sollicitées thermiquement et chimiquement en un matériau métallique de base, caractérisé par la composition suivante :

C 2,40 - 2,80 % en poids
Si max. - 1,5 % en poids
Cr 28,0 - 32,0 % en poids
Mn max. - 1,0 % en poids
Ni max. - 3,0 % en poids
Co Reste
Mo max. - 1,0 % en poids
W 11,5 - 14,0 % en poids
Fe max. - 3,0 % en poids
N 0,105 - 0,8 % en poids

4. Alliage à résistance mécanique élevée pour le revêtement de pièces de machine fortement sollicitées thermiquement et chimiquement en un matériau métallique de base, caractérisé par la composition suivante :

C 1,20 - 1,60 % en poids
Si 0,7 - 1,5 % en poids
Cr 26,0 - 30,0 % en poids
Mn max. - 0,5 % en poids
Ni max. - 3,0 % en poids
Co Reste
Mo max - 1,0 % en poids
W 3,5 - 5,5 % en poids
Fe max - 3,0 % en poids
N 0,105 - 0,8 % en poids

5. Alliage à résistance mécanique élevée pour le revêtement de pièces de machine fortement sollicitées thermiquement et chimiquement en un matériau métallique de base, caractérisé par la composition suivante :

C 1,75 - 2,10 % en poids
Si 0,9 - 1,3 % en poids
Cr 23,0 - 27,0 % en poids
Mn max. - 0,3 % en poids
Ni 21,0 - 24,0 % en poids
Co Reste
Mo max. - 0,6 % en poids
W 11,5 - 13,0 % en poids

EP 0 338 204 B1

Fe 0,85 - 1,35 % en poids
N 0,105 - 0,8 % en poids

6. Alliage à résistance mécanique élevée pour le revêtement de pièces de machine fortement sollicitées thermiquement et chimiquement en un matériau métallique de base, caractérisé par la composition suivante :
C 1,0 - 1,3 % en poids
Si 0,9 - 1,3 % en poids
Cr 27,0 - 30,0 % en poids
Mn 7,0 - 10,0 % en poids
Ni 15,0 - 25,0 % en poids
Co Reste
Mo max - 0,6 % en poids
W 10,0 - 12,0 % en poids
Fe max 1,35 % en poids
N 0,105 - 0,8 % en poids

7. Alliage à résistance mécanique élevée pour le revêtement de pièces de machine fortement sollicitées thermiquement et chimiquement en un matériau métallique de base, caractérisé par la composition suivante :
C 2,50 - 3,00 % en poids
Si 0,8 - 1,3 % en poids
Cr 22,0 - 26,0 % en poids
Mn max - 0,3 % en poids
Ni 10,0 - 12,0 % en poids
Mo 5,0 - 6,0 % en poids
Fe Reste
N 0,105 - 0,8 % en poids

8. Alliage à résistance mécanique élevée pour le revêtement de pièces de machine fortement sollicitées thermiquement et chimiquement en un matériau métallique de base, caractérisé par la composition suivante :
C 1,70 - 2,20 % en poids
Si max - 0,4 % en poids
Cr 26,0 - 30,0 % en poids
Mn max - 0,3 % en poids
Ni 14,0 - 16,0 % en poids
Mo 4,0 - 7,0 % en poids
Fe Reste
N 0,105 - 0,8 % en poids

9. Alliage à résistance mécanique élevée pour le revêtement de pièces de machine fortement sollicitées thermiquement et chimiquement en un matériau métallique de base, caractérisé par la composition suivante :
C 1,00 - 1,40 % en poids
Si 0,8 - 1,3 % en poids
Cr 28,0 - 32,0 % en poids
Mn max - 0,5 % en poids
Ni max - 2,25 % en poids
Co Reste
W 3,0 - 6,0 % en poids
Fe max - 3,0 % en poids
N 0,105 - 0,8 % en poids

10. Alliage à résistance mécanique élevée pour le revêtement de pièces de machine fortement solicitées thermiquement et chimiquement en un matériau métallique de base, caractérisé par la composition suivante :
C 1,70 - 2,20 % en poids

12

Si 0,9 - 1,3 % en poids
Cr 25,0 - 28,0 % en poids
Ni Reste
Co 10,0 - 12,0 % en poids
W 11,5 - 13,0 % en poids
Fe max - 1,35 % en poids
N 0,105 - 0,8 % en poids

11. Alliage à résistance mécanique élevée pour le revêtement de pièces de machine fortement sollicitées thermiquement et chimiquement en un matériau métallique de base, caractérisé par la composition suivante :
C 1,2 - 2,2 % en poids
Si max - 0,4 % en poids
Cr 18,0 - 25,0 % en poids
Mn 7,0 - 15,0 % en poids
Ni 15,0 - 25,0 % en poids
Mo 8,0 - 15,0 % en poids
Fe Reste
Al 0,2 - 1,0 % en poids
N 0,105 - 0,8 % en poids

12. Alliage à résistance mécanique élevée selon l'une quelconque des revendications 1 à 8, caractérisé en ce qu'il est appliqué en tant que matériau de blindage sur des soupapes à deux voies à gaz pour moteurs à combustion interne.

13. Alliage à résistance mécanique élevée selon l'une quelconque des revendications 2 à 10 et 12, caractérisé par une addition d'aluminium de 0,1 à 2% en poids par rapport à la charge des éléments résiduels.